# EUROPÄISCHE PATENTSCHRIFT

(11) **EP 3 664 622 B1**
(45) Veröffentlichungstag und Bekanntmachung des Hinweises auf die Patenterteilung: **01.05.2024**
(21) Anmeldenummer: 18752468.1
(22) Anmeldetag: 07.08.2018
(51) Int. Cl.: A22B 3/02, A22B 3/06

(54) **VERFAHREN UND VORRICHTUNG ZUM BETÄUBEN VON SCHLACHTVIEH**
METHOD AND DEVICE FOR STUNNING ANIMALS FOR SLAUGHTER
PROCÉDÉ ET DISPOSITIF D'ÉTOURDISSEMENT DE BÉTAIL DESTINÉ À L'ABATTAGE

(30) Priorität: 09.08.2017 DE 102017118070
(43) Veröffentlichungstag der Anmeldung: 17.06.2020
(73) Patentinhaber: Laser Zentrum Hannover E.V., 30419 Hannover (DE); Nowak, Bernhard, 30659 Hannover (DE); Hartung, Jörg, 30898 Gehrden (DE)
(72) Erfinder: NOWAK, Bernhard, 30659 Hannover (DE); HARTUNG, Jörg, 30898 Gehrden (DE); RIPKEN, Tammo, 31515 Wunstorf (DE); MEYER, Heiko, 30916 Isernhagen (DE)
(74) Vertreter: Gramm, Lins & Partner Patent- und Rechtsanwälte PartGmbB
(86) Internationale Anmeldenummer: PCT/EP2018/071365
(87) Internationale Veröffentlichungsnummer: WO 2019/030216

(56) Entgegenhaltungen:
- WO-A1-98/44805
- WO-A1-2011/137497
- DE-A1- 10 050 560

## Beschreibung

Die Erfindung betrifft ein Verfahren zum Betäuben von Schlachtvieh.

In der Regel wird Schlachtvieh vor dem eigentlichen Schlachtvorgang betäubt. Dadurch sollen insbesondere die Leiden der Tiere bei der eigentlichen Tötung verringert werden. Aus dem Stand der Technik sind unterschiedliche Betäubungsverfahren bekannt. So werden Tiere beispielsweise mittels eines Bolzenschusses auf den Schädel betäubt. Da die Schädelform jedoch individuell gestaltet ist und das Aufsetzen des Bolzenschussgerätes in der Regel per Hand erfolgt, ist eine vollständige Erfolgsquote, also eine vollständige Betäubung bei allen zu tötenden Schlachttieren, ausgeschlossen. Gleiches gilt beispielsweise bei der Verwendung einer Elektrozange, bei der das Schlachtvieh durch einen elektrischen Schlag betäubt werden soll. Bei diesen Betäubungsmethoden besteht die Möglichkeit, dass es bei dem zu tötenden Tier zu Krämpfen kommt, die mehrere Nachteile aufweisen. Derartige Krämpfe bedeuten für das Tier einen erheblichen Stress, wodurch einerseits die Leiden des Tieres vergrößert und andererseits die Qualität des erhaltenen Fleisches reduziert wird. Zudem besteht durch die bei Krämpfen unkontrollierte Bewegung des Tieres eine nicht unerhebliche Verletzungsgefahr für die sich im unmittelbaren Umfeld des Tieres befindende Mitarbeiter. Diese Gefahr ist naturgemäß umso größer, je größer das zu tötende Tier ist.

Aus dem Stand der Technik war es daher zur Verhinderung dieser Krämpfe bekannt, in den Schusskanal einen Spatel einzuführen, der gezielt die Verbindung zwischen dem Hirn und dem Rückenmark des Tieres mechanisch trennt. Dieses ist in vielen Ländern aufgrund hygienischer Bedenken nicht mehr zulässig, da bei der mechanischen Einwirkung Krankheitserreger in die Blutbahn und damit in das Fleisch gelangen können.

Aus der DE 100 50 560 C2 ist ein Verfahren und eine Vorrichtung zum Betäuben eines Schlachttieres bekannt, bei der die Betäubung des Tieres mittels Laser vorgeschlagen wird. Mit einem ersten Laser wird ein Zerstörungskanal durch den Schädel und Teile des Hirns des Schlachtviehs geschaffen, durch den anschließend ein zweiter Laser zur Erzeugung von akustischen Stoßwellen geleitet wird.

Dadurch wird die gewünschte Zielregion des tierischen Hirns zerstört und die Verbindung zwischen Hirn und Rückenmark durchtrennt. In einer alternativen Ausführungsform wird statt des ersten Lasers ein kurzer Bolzen verwendet, der in einem Bolzenschussverfahren die Schädeldecke des Tieres durchtrennt. Dabei ist jedoch darauf zu achten, dass der Bolzen eine mechanische Zerstörung von Hirnzellen nicht bewirkt. Es muss folglich weiterhin mit einem ersten Laser ein Zerstörungskanal geschaffen werden, der sich durch die Hirnareale des Tieres bis zur zu trennenden Verbindung erstreckt.

Nachteilig ist, dass der apparative und energetische Aufwand eines derartigen Verfahrens hoch ist. Um den Zerstörungskanal zu schaffen, durch den anschließend ein Laserstrahl eines zweiten Lasers nahezu unbeeinflusst hindurchgeleitet werden kann, ist eine große Energiemenge und eine relativ lange Bestrahlungsdauer erforderlich. Während dieser Zeit darf sich der Schädel des Tieres nicht oder nur minimal bewegen.

Der Erfindung liegt daher die Aufgabe zugrunde, ein Verfahren zum Betäuben von Schlachtvieh bereitzustellen, das schnell, sicher und kostengünstig durchgeführt werden kann und eine erhöhte Sicherheit für die beteiligten Menschen und weniger Leiden für die zu tötenden Tiere erreicht.

Die Erfindung löst die gestellte Aufgabe durch ein Verfahren zum Betäuben von Schlachtvieh, das die folgenden Schritte aufweist: a) Durchbrechen eines Schädels des Schlachtviehs mit einem Bolzen, sodass der Bolzen in ein Hirn des Schlachtviehs eindringt, b) Aussenden elektromagnetischer Strahlung durch einen Strahlungskanal innerhalb des Bolzens, sodass die elektromagnetische Strahlung die Medulla oblongata und/oder einen diese umgebenden Bereich des Hirns derart beschädigt, dass eine Signalleitung von dem Hirn durch ein Rückenmark des Schlachtviehs unterbunden wird.

Das erfindungsgemäße Verfahren weist den Vorteil auf, dass, anders als im Stand der Technik, die zur Zerstörung der Medulla oblongata und/oder eines umgebenden Bereichs des Hirns verwendete Laserstrahlung durch den Bolzen hindurchgeleitet werden kann, sodass es nicht notwendig ist, energie- und zeitaufwendig einen entsprechenden Kanal mittels eines ersten Lasers herzustellen. Bereits kurz nach dem Eindringen des Bolzens in den Schädel des Tieres kann die entsprechende Laserstrahlung durch den Bolzen hindurchgeleitet werden und trifft möglichst direkt auf die zu zerstörende Region. Dadurch wird die Dauer zwischen dem Auftreffen des Bolzens und dem Durchtrennen der Medulla oblongata und/oder des umgebenden Bereichs des Hirns minimiert, sodass die Gefahr tonischer Krämpfe drastisch reduziert wird. Dies hat eine starke Erhöhung der Sicherheit des beteiligten Personals zur Folge. Hinzu kommt, dass auch die Zeit bis zur sicheren Betäubung des Tieres drastisch reduziert wird, wodurch die Leiden des Tieres verringert werden können. Zusätzlich wird die benötigte Menge der Laserenergie reduziert, wodurch Kosten gespart werden.

Vorteilhafterweise weist der Bolzen beim Aussenden der Strahlung einen Abstand von der Medulla oblongata und/oder dem umgebenden Bereich des Hirns von höchstens 5 cm, bevorzugt höchstens 3 cm, besonders bevorzugt höchstens 1 cm auf. Je näher das Ende des Strahlungskanals innerhalb des Bolzens, aus dem die elektromagnetische Strahlung austritt, an die Medulla oblongata und/oder den umgebenden Bereich des Hirns herangeführt werden kann, desto weniger Strahlungsenergie und Zeit wird benötigt, um die vollständige Betäubung des Tieres zu erreichen.

Die Erfindung löst die gestellte Aufgabe zudem durch eine Vorrichtung zum Durchführen eines derartigen Verfahrens, die sich dadurch auszeichnet, dass der Bolzen eine Stirnfläche zum Auftreffen auf den Schädel aufweist, die flüssigkeitsdicht und gasdicht ausgebildet ist, und einen Strahlungskanal aufweist, durch den elektromagnetische Strahlung zu der Stirnfläche leitbar ist, und dass die Vorrichtung einen Laser zum Aussenden der elektromagnetischen Strahlung aufweist.. Auf diese Weise ist sichergestellt, dass keine Gewebeflüssigkeiten oder andere Dekontaminierungsflüssigkeiten in den Bolzen eindringen können. Da der Bolzen zudem gasdicht ausgebildet ist, kann keine Druckluft, die gegebenenfalls aus dem Bolzenschussgerät in den Innenraum des Bolzens eindringt, in den Tierschädel gelangen.

Erfindungsgemäß verfügt der Bolzen der Vorrichtung über einen Strahlungskanal, durch den die elektromagnetische Strahlung zu der Stirnfläche leitbar ist. In diesem Fall bildet zumindest ein Teil der Stirnfläche ein Austrittsfenster, aus dem die elektromagnetische Strahlung austreten kann. Dies erfolgt vorteilhafterweise parallel zur Längserstreckungsrichtung des Bolzens, die vorzugsweise gleichzeitig die Bolzenschussrichtung ist. Alternativ oder zusätzlich dazu kann auch ein Austrittsfenster an einer Bolzenmantelfläche vorgesehen sein, sodass zumindest ein Teil der elektromagnetischen Strahlung, vorzugsweise die gesamte elektromagnetische Strahlung aus der Mantelfläche des Bolzens austreten kann. In einer besonders bevorzugten Ausgestaltung sind mehrere Austrittsfenster vorgesehen, die je nach verwendeter Schussrichtung und Orientierung des Bolzens innerhalb des Schädels umschaltbar gewählt werden können. Auf diese Weise kann, an unterschiedliche Schädelgeometrien, Schusskanalrichtungen und sonstige Anforderungen angepasst, ein optimales Verfahren ausgewählt werden.

Besonders bevorzugt ist der Strahlungskanal mit einem lichtleitenden Material, beispielsweise einem Glas, einem transparenten Kunststoff, einer Keramik, einem Kristall oder einer Kombination dieser Materialien gefüllt. Selbstverständlich ist es auch möglich, dass der Strahlungskanal nicht mit einem Festkörper, sondern beispielsweise mit einem Gas oder einer Flüssigkeit gefüllt ist und nach außen durch das Lichtaustrittsfenster und gegebenenfalls ein am entgegengesetzten Ende des Strahlungskanals angeordnetes Lichteintrittsfenster begrenzt wird. Auch ein Strahlungskanal, in dem ein starker Unterdruck, also ein Vakuum, herrscht, ist für bestimmte Anwendungen von Vorteil.

In einer besonders bevorzugten Ausführungsform ist das optische Fenster, das das Austrittsfenster bildet, auswechselbar am Bolzen angeordnet. Der Bolzen besteht vorteilhafterweise aus Metall. Ein auswechselbares Fenster ist insbesondere dann von Vorteil, wenn beispielsweise durch Verschleiß oder andere Beschädigungen die optische Qualität des Austrittsfensters nicht mehr gewährleistet ist, weil beispielsweise Kratzer auf dem Fenster vorhanden sind. Es hat sich als besonders vorteilhaft herausgestellt, wenn auf einem Austrittsfenster auf der Außenseite des Bolzens eine Folie angeordnet ist, die einfach ausgetauscht werden kann.

Vorteilhafterweise verfügt der Bolzen an der Stirnfläche über wenigstens einen Vorsprung. Die Stirnfläche des Bolzens ist der Teil des Bolzens, der als erstes mit dem Schädel des Schlachtviehs in Kontakt kommt. Der Vorsprung ist folglich der Teil, der dem größten Druck ausgesetzt ist. Vorteilhafterweise ist der Vorsprung ringförmig, insbesondere kreisringförmig ausgebildet. Durch einen derartigen Vorsprung liegt das Austrittsfenster des Strahlungskanales etwas hinter dem Vorsprung zurück, sodass die beim Auftreffen auf den Schädel wirkenden mechanischen Kräfte hauptsächlich von dem Vorsprung abgefangen und aufgenommen werden, und die mechanische Beanspruchung eines Austrittsfensters reduziert wird. Vorzugsweise ist die Breite des Vorsprungs in radialer Richtung zwischen 0,5 mm und 1,5 mm, bevorzugt 1 mm.

Das Austrittsfenster kann neben dem Abschluss des Strahlungskanals auch optische Funktionen aufweisen. So kann es beispielsweise eine Kollimation des austretenden Laserlichtes bewirken, indem es beispielsweise als Kollimatorlinse oder als Sammellinse ausgebildet ist.

Vorteilhafterweise verfügt die Vorrichtung über ein Anschlagselement, durch das eine Bewegung des Bolzens in Richtung auf das Schlachtvieh nur bis zu einer Anschlagsposition möglich ist. Alternativ oder zusätzlich dazu kann auch durch die Menge der verwendeten Druckluft bei einem Druckluftbolzenschussgerät die Eindringtiefe festgelegt werden. Auf diese Weise wird erreicht, dass der Bolzen möglichst nah an die optimale Position, besonders bevorzugt genau an die optimale Position, innerhalb des Tierschädels geführt werden kann. Vorzugsweise ist der Bolzen in Kombination mit einem entsprechenden Bolzenschussgerät so ausgeführt, dass eine starre Verbindung zwischen Bolzen und Schussgerät gegeben ist, selbst für den Fall, dass das zu schlachtende Tier kollabiert.

Erfindungsgemäß verfügt die Vorrichtung über einen Laser zum Aussenden der elektromagnetischen Strahlung, der vorzugsweise Strahlungen einer Wellenlänge von 700 nm bis 3000 nm, bevorzugt von 900 nm bis 1700 nm, besonders bevorzugt von 940 nm bis 1550 nm, beispielsweise 1070 nm aussendet. Der Laser ist vorzugsweise in einem der Stirnfläche abgewandten Bereich des Bolzens angeordnet und verfügt beispielsweise über wenigstens eine Laserdiode. Derartige Laserdioden sind geometrisch klein auszubilden und benötigen eine geringe Menge elektrischer Energie, sodass sie direkt im Bolzen angeordnet werden können. Dadurch wird die Vorrichtung klein und kostengünstig ausbildbar. Alternativ oder zusätzlich dazu kann selbstverständlich auch ein externer Laser, der also nicht innerhalb des Bolzens angeordnet ist, verwendet werden. In diesem Fall wird die von diesem Laser ausgesandte Laserstrahlung über eine optische Vorrichtung, insbesondere einen Lichtleiter, beispielsweise ein Glasfaserkabel in den Strahlungskanal des Bolzens eingeleitet.

Es hat sich als vorteilhaft herausgestellt, dass ein transparenter Festkörper, der den Strahlungskanal des Bolzens bildet, aus einer metallischen Umhüllung, die die Mantelfläche des Bolzens bildet, entfernt, beispielsweise herausgeschoben werden kann. Dadurch wird eine leichte Auswechselbarkeit und gegebenenfalls Anpassbarkeit an geänderte Anforderungen erreicht.

Der Schutzumfang der vorliegenden Erfindung wird durch die angefügten Ansprüche definiert.

## Patentansprüche

1. Verfahren zum Betäuben von Schlachtvieh, wobei das Verfahren folgenden Schritte aufweist:
a. Durchbrechen eines Schädels des Schlachtviehs mit einem Bolzen, so dass der Bolzen in ein Hirn des Schlachtvieh eindringt,
b. Aussenden elektromagnetischer Strahlung durch einen Strahlungskanal innerhalb des Bolzens, so dass die elektromagnetische Strahlung die Medulla oblongata und/oder einen diese umgebenden Bereich des Hirns derart beschädigt, dass eine Signalleitung von dem Hirn durch ein Rückenmark des Schlachtviehs unterbunden wird.

2. Verfahren nach Anspruch 1, **dadurch gekennzeichnet, dass** der Bolzen beim Aussenden der Strahlung einen Abstand von der Medulla oblongata von höchstens 5 cm, bevorzugt höchstens 3 cm, besonders bevorzugt höchstens 1 cm aufweist.

3. Vorrichtung zum Durchführen eines Verfahrens nach Anspruch 1 oder 2, **dadurch gekennzeichnet, dass** der Bolzen eine Stirnfläche zum Auftreffen auf dem Schädel aufweist, die flüssigkeitsdicht und gasdicht ausgebildet ist, und einen Strahlungskanal aufweist, durch den elektromagnetische Strahlung zu der Stirnfläche leitbar ist, und dass die Vorrichtung einen Laser zum Aussenden der elektromagnetischen Strahlung aufweist.

4. Vorrichtung nach Anspruch 3, **dadurch gekennzeichnet, dass** der Strahlungskanal mit einem lichtleitenden Material, vorzugsweise einem Festkörper, gefüllt ist

5. Vorrichtung nach Anspruch 3 oder 4, **dadurch gekennzeichnet, dass** der Bolzen an der Stirnfläche wenigstens einen Vorsprung aufweist, wobei der Vorsprung vorzugsweise ringförmig, besonders bevorzugt kreisringförmig.

6. Vorrichtung nach Anspruch 5, **dadurch gekennzeichnet, dass** der Vorsprung in radialer Richtung eine Breite zwischen 0,5 mm und 1,5 mm, bevorzugt 1 mm aufweist.

7. Vorrichtung nach einem der Ansprüche 3 bis 6, **dadurch gekennzeichnet, dass** die Vorrichtung wenigstens ein Anschlagselement aufweist, durch das eine Bewegung des Bolzens in Richtung auf das Schlachtvieh nur bis zu einer Anschlagsposition möglich ist.

8. Vorrichtung nach Anspruch 7, **dadurch gekennzeichnet, dass** das Anschlagselement derart ausgebildet ist, dass die Anschlagsposition einstellbar ist.

9. Vorrichtung nach einem der Ansprüche 3 bis 8, **dadurch gekennzeichnet, dass** der Laser Strahlung einer Wellenlänge von 700 nm bis 3000 nm, bevorzugt von 900 nm bis 1700 nm, besonders bevorzugt von 940 nm bis 1550 nm, beispielsweise 1070 nm aussendet.

10. Vorrichtung nach Anspruch einem der vorstehenden Ansprüche, **dadurch gekennzeichnet, dass** der Laser in einem der Stirnfläche abgewandten Bereich des Bolzens angeordnet ist und wenigstens eine Laserdiode aufweist.

## Claims

1. A method for stunning animals for slaughter, the method comprising the following steps:
a. breaking through the skull of an animal for slaughter with a bolt so that the bolt penetrates the brain of the animal,
b. emitting electromagnetic radiation through a radiation channel within the bolt so that the electromagnetic radiation damages the medulla oblongata and/or an area of the brain surrounding it in such a way that signal conduction from the brain through a spinal cord of the animal for slaughter is prevented.

2. The method according to claim 1, **characterised in that** the bolt is at a distance of at most 5 cm, preferably at most 3 cm, especially preferably at most 1 cm, from the medulla oblongata when the radiation is emitted.

3. A device for carrying out a method according to claim 1 or 2, **characterised in that** the bolt has an end face for striking the skull, said end face being liquid-tight and gas-tight, and a radiation channel through which electromagnetic radiation can be conducted to the end face, and that the device comprises a laser for emitting the electromagnetic radiation.

4. The device according to claim 3, **characterised in that** the radiation channel is filled with a light-conductive material, preferably a solid body.

5. The device according to claim 3 or 4, **characterised in that** the bolt comprises at least one projection on the end face, the projection preferably being annular, especially preferably circular.

6. The device according to claim 5, **characterised in that** the projection has a width between 0.5 mm and 1.5 mm, preferably 1 mm, in the radial direction.

7. The device according to one of the claims 3 to 6, **characterised in that** the device comprises at least one end stop element, by means of which a movement of the bolt in the direction of the animal for slaughter is only possible up to an end stop position.

8. The device according to claim 7, **characterised in that** the end stop element is designed such that the end stop position can be adjusted.

9. The device according to one of the claims 3 to 8, **characterised in that** the laser emits radiation with a wavelength of 700 nm to 3000 nm, preferably from 900 nm to 1700 nm, especially preferably from 940 nm to 1550 nm, for example 1070 nm.

10. The device according to one of the preceding claims, **characterised in that** the laser is arranged in an area of the bolt facing away from the end face and comprises at least one laser diode.

## Revendications

1. Procédé d'étourdissement de bétail de boucherie, le procédé comprenant les étapes suivantes consistant à :
a. percer le crâne d'un bétail de boucherie à l'aide d'une cheville, de telle sorte que la cheville pénètre dans le cerveau du bétail de boucherie,
b. émettre un rayonnement électromagnétique à travers un canal de rayonnement situé à l'intérieur de la cheville, de sorte que le rayonnement électromagnétique endommage le bulbe rachidien et/ou une zone du cerveau qui l'entoure, de manière à interrompre une conduction de signaux du cerveau à travers une moelle épinière du bétail de boucherie.

2. Procédé selon la revendication 1,
**caractérisé en ce que** lors de l'émission du rayonnement, la cheville se trouve à une distance du bulbe rachidien de 5 cm au maximum, de préférence de 3 cm au maximum, de manière particulièrement préférée de 1 cm au maximum.

3. Dispositif pour la mise en oeuvre d'un procédé selon la revendication 1 ou 2,
**caractérisé en ce que** la cheville présente une face frontale destinée à frapper le crâne, qui est étanche aux liquides et aux gaz, et présente un canal de rayonnement à travers lequel un rayonnement électromagnétique peut être conduit vers la face frontale, et
**en ce que** le dispositif présente un laser pour émettre le rayonnement électromagnétique.

4. Dispositif selon la revendication 3,
**caractérisé en ce que** le canal de rayonnement est rempli d'un matériau conducteur de lumière, de préférence d'un corps solide.

5. Dispositif selon la revendication 3 ou 4,
**caractérisé en ce que** la cheville présente au moins une saillie sur la face frontale, la saillie étant de préférence en forme d'anneau, de manière particulièrement préférée en forme d'anneau circulaire.

6. Dispositif selon la revendication 5,
**caractérisé en ce que** dans la direction radiale, la saillie présente une largeur comprise entre 0,5 mm et 1,5 mm, de préférence égale à 1 mm.

7. Dispositif selon l'une des revendications 3 à 6,
**caractérisé en ce que** le dispositif comprend au moins un élément de butée permettant un déplacement de la cheville en direction du bétail de boucherie uniquement jusqu'à une position de butée.

8. Dispositif selon la revendication 7,
**caractérisé en ce que** l'élément de butée est conçu de telle sorte que la position de butée est réglable.

9. Dispositif selon l'une des revendications 3 à 8,
**caractérisé en ce que** le laser émet un rayonnement d'une longueur d'onde de 700 nm à 3000 nm, de préférence de 900 nm à 1700 nm, de manière particulièrement préférée de 940 nm à 1550 nm, par exemple de 1070 nm.

10. Dispositif selon l'une des revendications précédentes,
**caractérisé en ce que** le laser est disposé dans une zone de la cheville détournée de la face frontale et comprend au moins une diode laser.
